Europäisches Patentamt

European Patent Office

Office européen des brevets

(19)

(11) **EP 0 642 251 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
*H04M 9/10* *(2006.01)*       *H04M 9/08* *(2006.01)*

(21) Anmeldenummer: **94113643.4**

(22) Anmeldetag: **31.08.1994**

(54) **Verfahren zur automatischen Sprachrichtungsumschaltung und Schaltungsanordnung zur Durchführung des Verfahrens**

Method for the automatic switching of the speech direction and circuit arrangement for implementing the method

Procédé pour la commutation automatique de la direction de la parole, et circuit pour la mise en oeuvre du procédé

(84) Benannte Vertragsstaaten:
**AT BE CH DE FR GB IT LI NL**

(30) Priorität: **02.09.1993 DE 4329694**
          **04.02.1994 DE 4403532**

(43) Veröffentlichungstag der Anmeldung:
**08.03.1995 Patentblatt 1995/10**

(73) Patentinhaber: **Infineon Technologies AG**
**81669 München (DE)**

(72) Erfinder:
• **Degenhardt, Achim, Dipl.-Ing.**
**D-81249 München (DE)**

• **Henkel, Thomas, Dipl.-Ing.**
**D-85667 Oberpframmern (DE)**

(74) Vertreter: **Charles, Glyndwr et al**
**Reinhard-Skuhra-Weise & Partner,**
**Patentanwälte,**
**Friedrichstrasse 31**
**80801 München (DE)**

(56) Entgegenhaltungen:
**EP-A- 0 423 537          US-A- 4 542 263**
**US-A- 5 048 082**

## Beschreibung

Die Erfindung betrifft ein Verfahren zur automatischen Sprachrichtungsumschaltung bei dem ein Empfangssignal mit veränderbarer Dämpfung einem Lautsprecher zugeführt wird, bei dem ein von einem Mikrofon abgegebenes Signal mit einer veränderbaren Dämpfung als Sendesignal vorgesehen ist, bei dem Empfangssignal und Mikrofonsignal jeweils fortlaufend als Sprachsignal oder Geräusch klassifiziert werden, bei dem die Dämpfung jeweils des einen Signals, das als Sprachsignal klassifiziert worden ist, auf einen ersten Dämpfungswert und das jeweils andere Signal auf einen gegenüber dem ersten größeren Dämpfungswert eingestellt wird, bei dem im Falle der Klassifizierung beider Signale als Sprachsignale die vorhergehenden Dämpfungswerte beibehalten werden, bei dem im Falle der Klassifizierung beider Signale als Geräusche beide Dämpfungen auf einen zwischen erstem und zweitem Dämpfungswert liegenden dritten Dämpfungswert eingestellt werden.

Weiterhin betrifft die Erfindung eine Schaltungsanordnung zur Durchführung dieses Verfahrens mit einem steuerbaren Empfangsabschwächer, an dessen Eingang das Empfangssignal angelegt ist und an dessen Ausgang ein zur Ansteuerung des Lautsprechers vorgesehenes Signal anliegt, einem steuerbaren Sendeabschwächer, an dessen Eingang das Mikrofonsignal angelegt ist und an dessen Ausgang das Sendesignal anliegt, zwei Signal-Geräusch-Detektoren, von denen dem einen das Empfangssignal oder das Lautsprechersignal und dem anderen das Mikrofonsignal oder das Sendesignal zugeführt wird, und die Empfangssignal und Sendesignal fortlaufend als Sprachsignal oder Geräusch klassifizieren und mit einer den Signal-Geräusch-Detektoren nachgeschalteten Kontroll-Logik zur Steuerung des Empfangs- und Sendeabschwächers, die in einem Fall die Dämpfung jeweils des Signalzweiges, dessen Signal als Sprachsignal klassifiziert worden ist, auf einen ersten Dämpfungswert und das jeweils andere Signal (Tx, Rx) auf einen gegenüber dem ersten größeren zweiten Dämpfungswert einstellt, im Falle der Klassifizierung beider Signale als Sprachsignale die vorhergehenden Dämpfungswerte beibehält und im Falle der Klassifizierung beider Signale als Geräusche einen zwischen erstem und zweitem Dämpfungswert liegenden dritten Dämpfungswert einstellt.

Der Komfort bei Telefonapparaten ist in den letzten Jahren deutlich gestiegen. Neben Wahlwiederholung, Rufnummernspeicherung und Lauthören ist auch die Möglichkeit, frei zu sprechen, d. h. ohne Handapparat zu telefonieren, eine begehrte Funktion des Telefons geworden. Diese Funktion finden neben der Anwendung im privaten Bereich viele sinnvolle Einsatzmöglichkeiten, beispielsweise im Bereich der Bürokommunikation, wie etwa bei Telefonkonferenzen, beim Einsatz in einem Autotelefon oder in allen anderen Fällen, in denen das Halten des Handapparates hinderlich ist.

Der grundsätzliche Unterschied zwischen einem normalen Telefon mit Handapparat und einem Freisprechtelefon besteht in der Betriebsweise: Ersteres arbeitet im Gegensprechbetrieb, d. h. es findet eine Übertragung in beiden Richtungen - also Senden und Empfangen - gleichzeitig statt. Beim Freisprechtelefon ist dies nur mit sehr aufwendigen und unbefriedigend arbeitenden Verfahren möglich. Wegen der hohen Signalverstärkung in beiden Richtungen würde jeder Versuch der Konversation im Gegensprechbetrieb sofort zu einem starken Rückkopplungspfeifen führen, da durch die akustische Kopplung zwischen Lautsprecher und Mikrofon eine geschlossene Schleife entsteht. Freisprechtelefone können daher nur im Wechselsprechbetrieb arbeiten, d. h. es kann immer nur einer der beiden Teilnehmer sprechen, während der andere zuhört. Um dies zu erreichen, benötigt man eine Schaltung, die feststellt, wer gerade spricht, um dann den betreffenden Kanal durchzuschalten und den anderen genügend abzuschwächen. Die Schleifenverstärkung wird somit unter Eins gehalten. Wenn die Sprecher ihre Funktion tauschen, muß die Schaltung dies sofort feststellen und die Kanäle entsprechend umschalten. Mit Hilfe einer Sprachrichtungserkennung in Verbindung mit einem elektronischen Umschalter arbeitet die Schaltung dann automatisch im Freisprechbetrieb.

Ein Verfahren und eine Schaltungsanordnung zur automatischen Sprachrichtungsumschaltung bei Telefonen ist beispielsweise aus der europäischen Patentanmeldung 0 423 537 bekannt.

Bei diesem Verfahren bzw. dieser Schaltungsanordnung wird der gerade nicht aktive Kanal gegenüber dem aktiven Kanal bedämpft. Dies führt dazu, daß der gerade Sprechende sein Gegenüber nicht hören kann. Daneben kann auch noch ein sogenannter Idle-Zustand angesteuert werden, in dem beide Kanäle mit der halben maximalen Dämpfung betrieben werden. Für den Fall, daß beide schweigen oder wenn der Sprechende durch das Geräusch am Ort des Hörers übertönt wird, wird langsam in den Idle-Zustand übergegangen (Slow Idle). Für den Fall, daß der Sprechende und der Lautsprecher etwa gleiche Pegel aufweisen, wird dagegen schnell in den Idle-Zustand übergegangen (Fast Idle). Ein Wechsel der Sprechrichtung ist nur möglich, wenn der bisher Sprechende schweigt und der bisher Hörende spricht.

Ein Unterbrechen des Sprechenden ist also nicht möglich. Tritt im Empfangszweig ein Störsignal auf, das fälschlicherweise als Sprachsignal eingeordnet wird, ist demzufolge ein Ändern der Sprechrichtung überhaupt nicht möglich.

Aufgabe der Erfindung ist es daher, ein Verfahren zur automatischen Sprachrichtungsumschaltung und eine Schaltungsanordnung zur Durchführung des Verfahrens anzugeben, das diesen Nachteil nicht aufweist.

Diese Aufgabe wird bei einem Verfahren der eingangs genannten Art dadurch gelöst, daß das dem Lautsprecher zugeführte Signal und das Mikrofonsignal miteinander sowie das Sendesignal und das Empfangssignal miteinander hinsichtlich einer der jeweiligen Signallautstärke zuordenbaren Größe verglichen werden, daß bei einer auf dem zweiten Dämpfungswert eingestellten Dämpfung das Mikrofonsignal im Falle eines um einen bestimmten ersten Differenzbetrag gegenüber dem Lautsprechersignal lauteren, als Sprachsignal erkannten Mikrofonsignals die Dämpfung des Mikrofonsignals auf den ersten Dämpfungswert und die Dämpfung des Empfangssignals auf den zweiten Dämpfungswert gesetzt wird und andernfalls die bisherigen Dämpfungen beibehalten werden und daß bei einer auf den zweiten Dämpfungswert eingestellten Dämpfung des Empfangssignals im Falle eines um einen bestimmten zweiten Differenzbetrag gegenüber dem Sendesignal lauteren, als Sprachsignal erkannten Empfangssignals die Dämpfung des Empfangssignals auf den ersten Dämpfungswert und die Dämpfung des Mikrofonsignals auf den zweiten Dämpfungswert gesetzt wird und andernfalls die bisherigen Dämpfungen beibehalten werden.

Bei der Schaltungsanordnung der eingangs genannten Art wird die Aufgabe dadurch gelöst, daß eine Vergleichseinrichtung, die das dem Lautsprecher zugeführte Signal und das Mikrofonsignal miteinander sowie das Sendesignal und das Empfangssignal miteinander hinsichtlich einer der jeweiligen Signallautstärke zuordenbare Größe vergleicht, mit der Kontroll-Logik gekoppelt ist und daß die Kontroll-Logik bei einem auf den zweiten Dämpfungswert eingestellten Sendeabschwächer im Falle eines um einen bestimmten Betrag gegenüber dem Lautsprechersignal lauteren, als Sprachsignal erkannten Mikrofonsignals die Dämpfung des Sendeabschwächers gleich dem ersten Dämpfungswert und die Dämpfung des Empfangsabschwächers gleich dem zweiten Dämpfungswert setzt, bei einem auf den zweiten Dämpfungswert eingestellten Empfangsabschwächer im Falle eines um einen bestimmten Betrag gegenüber dem Sendesignal lauteren, als Sprachsignal erkannten Empfangssignals den Empfangsabschwächer auf den ersten Dämpfungswert und die Dämpfung des Sendeabschwächers auf den zweiten Dämpfungswert setzt und andernfalls die bisherigen Dämpfungen beibehält.

Weiterbildungen und Ausgestaltungen des Erfindungsgedankens sind in Unteransprüchen gekennzeichnet.

Die Erfindung wird nachfolgend anhand der in den Figuren der Zeichnung dargestellten Ausführungsbeispiele näher erläutert. Es zeigen:

Figur 1    den prinzipiellen Verfahrensablauf bei einer bevorzugten Schaltungsanordnung zur Durchführung des Verfahrens in einem Blockschaltbild,
Figur 2    den durch das erfindungsgemäße Verfahren erzeugten Dämpfungsverlauf in einem Diagramm,
Figur 3    den bevorzugten Verfahrensablauf zur Unterscheidung von Sprache und Geräusch bei einer Schaltungsanordnung zur Durchführung des Verfahrens nach Figur 1 in einem Blockschaltbild,
Figur 4    eine bevorzugte Ausführungsform eines dabei verwendeten Tiefpasses in einem Blockschaltbild.

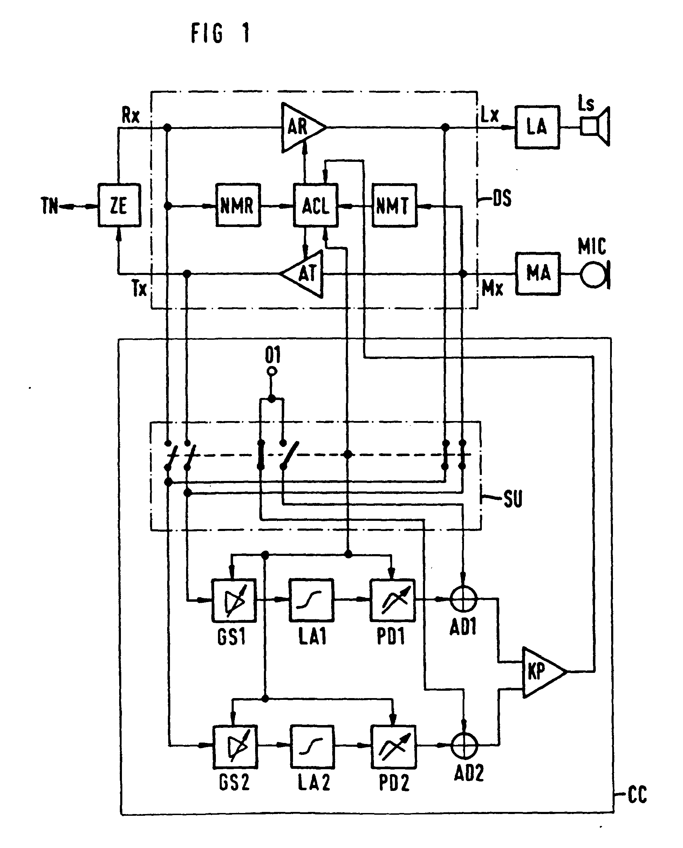

Bei den Ausführungsbeispiel gemäß Figur 1 werden über eine Fernsprechleitung bidirektional übertragene Signale in einer Zirkulatoreinrichtung ZE in ein Empfangssignal Rx und in ein Sendesignal Tx aufgespalten. Empfangs- und Sendesignal Rx, Tx werden einer erfindungsgemäßen automatischen Sprechrichtungsumschaltereinrichtung DS zugeführt bzw. entnommen. Des weiteren ist über eine Lautsprecheranpaßeinrichtung LA ein Lautsprecher LS, dem ein Signal Lx .zugeführt wird und über eine Mikrofonanpaßeinrichtung MA ein Mikrofon MIC, das ein Signal Mx abgibt, an die Sprechrichtungsumschaltereinrichtung DS angeschlossen. Die Sprechrichtungsumschaltereinrichtung DS weist einen steuerbaren Empfangsabschwächer AR, an dessen Eingang das Empfangssignal Rx angelegt ist und an dessen Ausgang das Signal Lx anliegt, und einen steuerbaren Sendeabschwächer AT, an dessen Eingang das Signal Mx angelegt ist und an dessen Ausgang das Sendesignal Tx anliegt, auf. Zur Steuerung des Empfangs- und Sendeabschwächers AR, AT ist einen Kontroll-Logik ACL vorgesehen, die ihrerseits durch zwei Signal-Geräusch-Detektoren NMR, NMT angesteuert wird. Der eine Signal-Geräusch-Detektor NMR ist dabei mit dem Empfangssignal Rx und der andere Signal-Geräusch-Detektor NMT ist mit dem Signal Mx beaufschlagt. Prinzipiell ist es aber auch möglich, die Signal-Geräusch-Detektoren NMR; NMT mit dem Signal Lx bzw. dem Sendesignal Tx anzusteuern, da das Signal Lx proportional zu dem Empfangssignal Rx bzw. das Sendesignal Tx proportional zu dem Signal Mx ist.

Darüber hinaus ist die Kontroll-Logik ACL mit einer Vergleichseinrichtung CC gekoppelt, die zum einen die Signale Lx und Mx miteinander sowie die Signale Tx und Rx miteinander hinsichtlich einer der jeweiligen Signallautstärke zuordenbaren Größe vergleicht. Der Vergleich der einzelnen Signalpaare jeweils untereinander kann dabei fortlaufend und nebeneinander erfolgen, wobei ein Signalpaar dann noch nach bestimmten Kriterien auszuwählen ist, oder aber es wird nur das für den jeweiligen Betriebszustand maßgebliche Signalpaar verglichen. Bei dem in Figur 1 gezeigten Ausführungsbeispiel ist die zuletzt genannte Möglichkeit realisiert. Die Vergleichsschaltung CC enthält einen Komparator KP, dessen Ausgangssignal der Kontroll-Logik ACL zugeführt wird und dessen Eingänge jeweils ein Spitzenwertdetektor PD1 und PD2 vorgeschaltet ist. Beide Spitzenwertdetektoren PD1 und PD2 weisen eine Entladezeitkonstante von beispielsweise 512 msec auf oder arbeiten mit einem festen Dekrementwert, da aufgrund vorangeschalteten, logarithmischen Verstärkern LA1 und LA2 die Spitzenwertdetektoren PD1 und PD2 streng logarithmisch arbeiten. Den Spitzenwertdetektoren vorgeschaltet ist jeweils ein logarithmischer Verstärker LA1 und LA2, die jeweils für einen Komprimierung des ihnen zugeführten Signals sorgen und damit den erforderlichen Dynamikbereich der Spitzenwertdetektoren PD1 und PD2 verringern. Außerdem wird durch die Komprimierung eine dem Lautstärkeempfinden entsprechende Wertung erzielt. Den logarithmischen Verstärkern LA1 und LA2 wiederum ist jeweils eine Pegelanpaßstufe GS1 bzw.

GS2 vorgeschaltet, die einen konstanten, aufgrund des akustischen Echos bzw. Gabelechos erwartenden Dämpfungs- bzw. Verstärkungswert erzeugt. Jede Pegelanpaßstufe GS1 bzw. GS2 kann wiederum in zwei Verstärkerstufen aufgeteilt werden. Eine erste Stufe GS2a könnte den Echoweg nachbilden und berücksichtigt hierbei eine mögliche Signalbeschneidung aufgrund des endlichen Aussteuerungsbereichs. Eine derartige Signalbeschneidung kann durch eine eventuelle Pegelüberhöhung/Verstärkung zwischen dem dem Lautsprecher zugeführten Signal Lx und das vom Mikrofon abgegebene Signal Mx verursacht werden. Die zweite Stufe GS2b würde einen aufgrund der Signallaufzeit notwendigen Vorhalt realisieren. GS1 könnte ebenso wie GS2 in zwei Verstärkerstufen realisiert werden. Je nach Betriebsfall, ob die Signale Lx und Mx oder die Signale Tx und Rx miteinander verglichen werden, können die Verstärkerstufen GS1 bzw. GS2, sowie die Spitzenwertdetektoren PD1 bzw. PD2 unterschiedlich eingestellt werden. Die Kontroll-Logik ACL schaltet jeweils auf die, dem Betriebsfall zugeordneten, Werte um. Alternativ könnte die Verstärkerstufen GS1 bzw. GS2 auch jeweils zwischen logarithmischem Verstärker LA1 bzw. LA2 und Spitzenwertdetektor PD1 bzw. PD2 geschaltet werden. Auf die Pegelanpaßstufen GS1 und GS2 wird mittels einer Schalteinrichtung SU entweder das Empfangssignal Rx und das Sendesignal Tx oder das dem Lautsprecher zugeführte Signal Lx und das vom Mikrofon abgegebene Signal Mx aufgeschaltet. Außerdem wird durch die Schalteinrichtung SU ein Offset-Signal je nach Betriebsfall auf einen Eingang des Komparators KP aufgeschaltet. Das Offset-Signal 01 wird dabei entweder einem Addierer AD1 oder einem Addierer AD2 zugeführt, der je nach Betriebsfall das Offset-Signal 01 dem Ausgangssignal des Phasendetektors PD1 oder PD2 additiv überlagert. Die Steuerung der Schalteinheit SU erfolgt durch die Kontrolleinheit ACL, die wiederum das Ausgangssignal des Komparators KP auswertet.

Die Dekremente der Spitzenwertdetektoren PD1 und PD2, sowie die Verstärkungsglieder GS1 und GS2 könnten für jeden Betriebsfall umschaltbar realisiert werden. Somit würden sich zwei Arbeitszustände je Betriebsfall ergeben. Auf der Akustikseite, auf der die Signale Lx und Mx miteinander verglichen werden, kann abhängig vom als Sprache oder Geräusch klassifizierten Empfangssignal Rx umgeschalten werden. Dies würde eine Unterscheidung folgender Systemverhalten erlauben: kurzfristige, aber große Pegelüberhöhungen während Sprache aufgrund Resonanzen und direkter Kopplung werden mit größerem GS1 und größerem Dekrementen bzw. kleinerer Zeitkonstante optimal kontrolliert, während im Falle von nur Geräusch nach einer Haltezeit mit einem zweiten Parametersatz GS1 und PD1 lediglich die Pegelüberhöhung aufgrund des Raumechos und der indirekten Kopplung vorgehalten wird. Auf der Leitungsseite, auf der die Signale Tx und Rx miteinander verglichen werden, kann abhängig vom als Sprache oder Geräusch klassifizierten Eingangssignals Mx unterschiedliche Echoeigenschaften berücksichtigt werden. So kann z. B. bei Sprache das Nah-Echo plus das Fern-Echo kontrolliert werden und bei Geräusch lediglich das Nah-Echo der eigenen Gabel in seinem Pegel kompensiert werden.

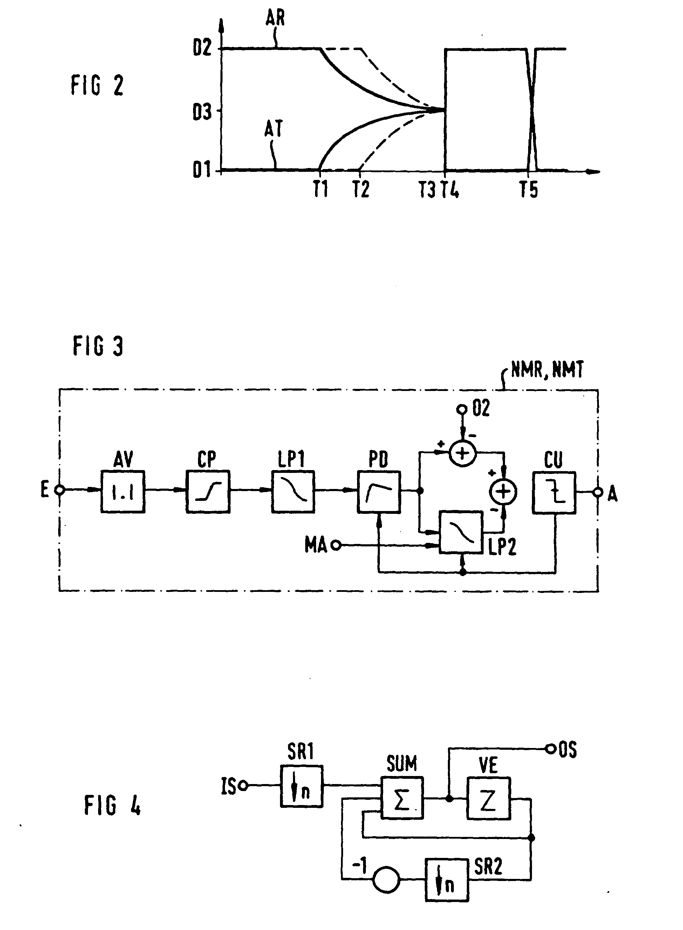

Beim Betrieb der in Figur 1 gezeigten Anordnung ist vorgesehen, daß das Empfangssignal Rx mit veränderbarer Dämpfung als Signal Lx dem Lautsprecher LS zugeführt wird und daß das Signal Mx ebenfalls mit veränderbarer Dämpfung als Sendesignal Tx Verwendung findet. Das Einstellen der jeweiligen Dämpfung (bzw. Verstärkung) erfolgt in Abhängigkeit von dem Empfangssignal Rx und von dem Signal Mx. Dazu werden beide Signale jeweils fortlaufend als Sprachsignal oder Geräusch klassifiziert. Für den Fall, daß eines der beiden Signale als Sprachsignal klassifiziert worden ist, wird die Dämpfung dieses Signals auf einen ersten Dämpfungswert D1 und das jeweils andere Signal auf einen zweiten Dämpfungswert D2 eingestellt und so lange beibehalten, bis das eine Signal wieder als Geräusch klassifiziert wird. Im Falle einer Klassifizierung beider Signale als Sprachsignal, werden die Dämpfungen entsprechend dem zuerst als Sprache erkannten Signal eingestellt. Im Falle einer Klassifizierung beider Signale als Geräusch, werden beide Dämpfungen auf einen zwischen erstem und zweitem Dämpfungswert liegenden dritten Dämpfungswert eingestellt. Der Übergang vom ersten oder zweiten Dämpfungswert D1, D2 auf den dritten Dämpfungswert D3 erfolgt langsamer als ein Übergang vom dritten Dämpfungswert D3 auf den ersten oder zweiten Dämpfungswert D1, D2 oder als ein Übergang von erstem Dämpfungswert D1 auf zweiten Dämpfungswert D2 und umgekehrt. Dieser Sachverhalt ist in Figur 2 grafisch dargelegt. Dort wird zunächst das Signal Mx als Sprachsignal und das Empfangssignal Rx als Geräusch klassifiziert. Daher ist die Dämpfung des Signals Rx gleich dem zweiten Dämpfungswert D2 und die Dämpfung des Signals Mx gleich D1, wobei D1 gleich der Dämpfung Null ist. Die Einstellung der Dämpfung erfolgt entsprechend mit dem Empfangsabschwächer für das Empfangssignal Rx und mit dem Sendeabschwächer für das Signal Mx. Zu einem Zeitpunkt T1 ändert sich das Signal Mx, so daß beide Signal-Geräusch-Detektoren NMR, NMT nun die entsprechenden Signale Rx, Mx als Geräusche klassifizieren. Der Übergang der Dämpfung von dem Wert D2 zu dem Wert D3 beim Empfangssignal Rx und der Übergang der Dämpfung von dem Wert D1 zu dem Wert D3 bei dem Signal Mx erfolgt stetig bis zu einem Zeitpunkt T3, wo beide Dämpfungswerte bis zu einem Zeitpunkt T4 verbleiben. Zum Zeitpunkt T4 wird nämlich erneut das Signal Mx als Sprachsignal erkannt. Die Dämpfung des Signals Mx wird daraufhin mit steiler Flanke auf den Dämpfungswert D1 und das Empfangssignal Rx auf den Wert D2 gebracht. Im Zeitpunkt T4 ändert sich die Sprechrichtung, so daß sich auch die Dämpfungen entsprechen umkehren. Erfindungsgemäß hat nun der jeweils Hörende die Möglichkeit, die Sprachrichtung zu ändern, in dem er den Sprechenden (also auch ein als Sprache erkanntes Störsignal) durch ein demgegenüber lauteres Sprechen übertönt. Die Vergleichseinrichtung CC vergleicht dazu abhängig vom jeweiligen Betriebszustand entweder das dem Lautsprecher zugeführte Signal Lx und das Mikrofonsignal Mx miteinander oder das Sendesignal Tx und das Empfangssignal Rx miteinander hinsichtlich einer der jeweiligen Signallautstärke zuordenbaren Größe. Die Kontroll-Logik ACL setzt daraufhin bei einem auf den zweiten Dämpfungswert eingestellten Sendeabschwächer AT im Falle eines um einen bestimmten Betrag gegenüber dem Lautsprechersignal Lx lauteren, als Sprachsignal erkannten Mikrofonsignals Mx die Dämpfung des Sendeabschwächers AT gleich dem ersten Dämpfungswert und die Dämpfung des Empfangsabschwächers AR gleich dem zweiten Dämpfungswert, während sie bei einem auf dem zweiten Dämpfungswert eingestellten Empfangsabschwächer AR im Falle eines um einen bestimmten Betrag gegenüber dem Sendesignal Tx lauteren, als Sprachsignal erkannten Empfangssignals Rx den Empfangsabschwächer AR auf den ersten Dämpfungswert und die Dämpfung des Sendeabschwächers AT auf den zweiten Dämpfungswert setzt. Das bedeutet, daß je nach Sprechrichtung eines der Signalpaare, nämlich Empfangs- und Sendesignal Rx, Tx einerseits und Lautsprechersignal Lx und Mikrofonsignal Mx andererseits, untersucht werden und bei einem markanten Unterschied, der beim Ausführungsbeispiel durch das Offset-Signal 01 und der Verstärkung/Dämpfung der Pegelanpaßstufe GS1 bzw. GS2 gegeben ist, zu einer Änderung der Sprechrichtung führt. In allen anderen Fällen werden die Dämpfungen beibehalten, die durch die Kontroll-Logik ACL anhand der Signal-Geräusch-Detektoren NMR, NMT ermittelt wird. Die Steuerung der Schalteinheit SU erfolgt demgemäß durch die Kontroll-Logik ACL. Anstelle einer einzigen Auswerteeinheit CC, die zwischen den beiden Signalpaaren umschaltet, können auch zwei separate Vergleichseinrichtungen vorgesehen werden, wobei durch die Kontroll-Logik ACL nur das Vergleichsergebnis berücksichtigt ist, das im jeweiligen Betriebsfall von Interesse ist. Darüber hinaus ist eine weitere Schaltungsvariante dadurch gegeben, daß anstelle eines Offset-Signals zwei unterschiedliche Offset-Signale, die auf jeweils einen Eingang des Komparators KP aufgeschaltet werden oder ein differentielles Offset-Signal vorgesehen, das je nach Betriebsfall invertiert oder nicht invertiert auf beide Eingänge aufgeschaltet wird, werden. Desweiteren ist anstelle einer Spitzenwertdetektion beispielsweise auch einen Leistungsmessung der einzelnen Signale und deren Vergleich für eine Beurteilung der Signallautstärke möglich. Eine Ausführungsform mit nur einer Vergleichsschaltung, die in Ausgestaltung der Erfindung werden auch die Pegelanpaßstufen GS1 und GS2 gemäß der jeweiligen Sprechrichtung an die jeweiligen Dämpfungsverhältnisse angepaßt. Beim Betrieb der in Figur 1 gezeigten Anordnung wird das Empfangssignal Rx mit veränderbarer Dämpfung als Signal Lx dem Lautsprecher LS zugeführt und das Signal Mx ebenfalls mit veränderbarer Dämpfung als Sendesignal Tx verwendet. Das Einstellen der jeweiligen Dämpfung erfolgt in Abhängigkeit von dem Empfangssignal Rx und von dem Signal Mx. Dazu werden beide Signale jeweils fortlaufend als Sprachsignal oder Geräusch klassifiziert und hinsichtlich der Lautstärke miteinander verglichen. Für den Fall, daß eines der beiden Signale als Sprachsignal klassifiziert worden ist, wird die Dämpfung dieses Signals auf einen ersten Dämpfungswert D1 und das jeweils andere Signal auf einen zweiten Dämpfungswert D2 eingestellt.

In Ausgestaltung der Erfindung erfolgt der durch den Signalwechsel zum Zeitpunkt T1 bedingte Übergang der Dämpfungen nach Ablauf einer gegebenen Verzögerungszeit erst zum Zeitpunkt T2, wenn zum Zeitpunkt T1 das Empfangssignal Rx und das Signal Mx als Geräusch klassifiziert werden. Die Zeitdauer des Übergangs kann dabei beibehalten werden oder, wie gezeigt, auch in kürzerer Zeit ablaufen.

Zur Klassifizierung von Empfangssignal Rx und Signal Mx als Sprachsignal oder Geräusch wird zunächst der Betrag des jeweiligen Signals Rx, Mx gebildet und daraufhin eine Amplitudenkompandierung durchgeführt. Nach einer ersten Tiefpaßfilterung mit gegebener Zeitkonstante, einer Spitzenwertdetektion mit zwei alternativen Abklingzeitkonstanten und einer zweiten Tiefpaßfilterung mit zwei alternativen Zeitkonstanten wird ein Vergleich des Signals nach der Spitzenwertdetektion abzüglich eines Offset-Signals mit dem Signal nach der zweiten Tiefpaßfilterung durchgeführt. Die Klassifizierung des Signals als Sprachsignal und damit verbunden, ein Einstellen der größeren Zeitkonstante bei der Spitzenwertdetektion und der zweiten Tiefpaßfilterung resultiert aus dem Überwiegen des Signals nach der Spitzenwertdetektion abzüglich des Offset-Signals gegenüber dem Signal nach der zweiten Tiefpaßfilterung. Im umgekehrten Fall wird das Signal als Geräusch klassifiziert und die kleinere Zeitkonstante bei Spitzenwertdetektion und zweiter Tiefpaßfilterung eingestellt. Ein Verzicht auf Spitzenwertdetektion und Zeitkonstantenumschaltung bei der zweiten Tiefpaßfilterung ist dabei für zahlreiche Anwendungen ebenfalls möglich.

Die Klassifizierung von Sprachsignal und Geräusch beruht darauf, daß Sprachsignale im allgemeinen eine zeitlich stark strukturierte Hüllkurve mit ausgeprägten Amplitudenschwankungen aufweisen und daher annähernd als impulsförmige Signal betrachtet werden können, während es sich bei Geräuschen überwiegend um relativ gleichförmige, stationäre Signale handelt. Um also Impulshaftigkeit von Gleichförmigkeit zu unterscheiden, wird das zu untersuchende Signal zum einen über einen tiefpaßgefilterten Zweig (zweite Tiefpaßfilterung) und zum anderen über einen direkten Zweig, in dem von dem Signal lediglich ein Offset-Signal, bevorzugt ein Gleichsignal, subtrahiert wird, geführt. Impulsförmige Signale werden dabei durch die Tiefpaßfilterung in dem einen Zweig stärker bedämpft als die gleichförmigen. Im zweiten Zweig wird unabhängig von der Signalart vorgegangen. Somit läßt sich beim Vergleich beider Zweige eine Unterscheidung dadurch treffen, daß bei impulsartigen Signalen der erste Zweig einen geringeren Wert liefert als der zweite und umgekehrt bei gleichförmigen Signalen. Durch die vorausgehende Tiefpaßfilterung, wobei kurze Störimpulse durch die Tiefpaßfilterung (erste Tiefpaßfilterung) unterdrückt werden, werden die Signale in ihrer Struktur ausgeprägter und leichter unterscheidbar. Durch die Amplitudenkompandierung wird die Empfindlichkeit bei kleiner Aussteuerung erhöht und damit ein schnelleres Ansprechen des Signal-Geräusch-Detektors erreicht. Eine weitere Verbesserung wird in Weiterbildung der Erfindung durch die Spitzenwertdetektion und die Umschaltung der Zeitkonstanten bei Spitzenwertdetektion und zweiter Tiefpaßfilterung erreicht, indem bei gleichförmigen Signalen eine kleinere Zeitkonstante verwendet wird als bei impulsförmigen Signalen, wodurch ein Wechsel von Geräusch zu Sprachsignal sofort erkannt wird, während beim umgekehrten Fall die Beobachtungszeit länger ist, so daß kleinere Sprechpausen noch nicht zu einem Umschalten führen.

Dazu ist gemäß Figur 3 im vorliegenden Ausführungsbeispiel als Signal-Geräusch-Detektor NMR, NMT jeweils ein Gleichrichter AV am Eingang E, dem nachfolgend ein Kompander CP, diesem wiederum nachfolgend ein erster Tiefpaß LP1, daran anschließend eine Spitzenwertdetektor PD mit einstellbarer Zeitkonstante vorgesehen. Eine Auswerteschaltung CU am Ausgang A, der das Ausgangssignal des Spitzenwertdetektors PD abzüglich des Offset-Signals 02 und abzüglich des Ausgangssignals des zweiten Tiefpasses LP2 zugeführt wird, steuert über einen Ausgang die Zeitkonstanten von Spitzenwertdetektor PD und zweitem Tiefpaß LP2.

Die Erfindung weiterbildend ist die Zeitkonstante des ersten Tiefpaßfilters LP1 bei dem Signal-Geräusch-Detektor NMT für das Signal Mx größer als die des ersten Tiefpaßfilters LP1 bei dem Signal-Geräusch-Detektor NMR für das Empfangssignal Rx. Dies hat den Vorteil, daß der störende Einfluß von auf dem Übertragungsweg zwischen Lautsprecher LS und Mikrofon MIC auftretenden Echos verringert wird.

Zudem wird bei dem Signal Mx bzw. bei dem Empfangssignal Rx das Signal vor der zweiten Tiefpaßfilterung auf einen höheren Wert als der augenblickliche Amplitudenwert gesetzt, wenn die Klassifizierung des jeweils anderen Signals, also des Empfangssignals Rx bzw. des Signals Mx von Sprachsignal zu Geräusch wechselt. Ein bevorzugter Wert ist dabei der maximal darstellbare Amplitudenwert. Hierdurch wird vorteilhafterweise eine längere Verzögerungszeit zur Unterdrückung störender Echos erreicht.

Weiterhin ist in Weiterbildung der Erfindung vorgesehen, daß das Offset-Signal 02 für beide Signal-Geräusch-Detektoren NMR, NMT getrennt einstellbar ist. Im gezeigten Ausführungsbeispiel wird erfindungsgemäß das Offset-Signal 02 des einem Signal-Geräusch-Detektors für eine bestimmte Zeit größer eingestellt, wenn der andere Signal-Geräusch-Detektor sein Empfangssignal als Sprachsignal klassifiziert hat. Störende Echos werden dadurch noch wirksamer unterdrückt. Weiterhin ist es vorteilhaft, zur Unterdrückung von Störungen nach dem Übergang von Sprache auf Geräusch bei einem Signal-Geräusch-Detektor das Offset-Signal 02 und/oder den augenblicklichen Amplitudenwert des anderen Signal-Geräusch-Detektors für gewisse Zeit festzuhalten.

Bevorzugt wird das erfindungsgemäße Verfahren durch eine zeit- und amplitudendiskrete Signalverarbeitung durchgeführt. Die Vorteile dabei liegen in einer genauen Reproduzierbarkeit ohne Parameterstreuungen, in einer höheren Integrierbarkeit bei geringer externer Beschaltung und in einer höheren Kompatibilität mit digitalen Nachrichtennetzen, wie beispielsweise von ISDN-Systemen (ISDN = Integrated Services Digital Network). Bei dem gezeigten Ausführungsbeispiel sind dabei die Sende- und Empfangssignale Tx, Rx sowie die Signale Mx, Lx digital. Die Mikrofonanpaßeinrichtung MA und die Lautxsprecheranpaßeinrichtung sind damit unter anderem zur Analog-Digital- bzw. zur Digital-Analog-Wandlung vorgesehen.

In einem zeit- und amplitudendiskreten System wird eine Tiefpaßfilterung beispielsweise wie folgt ausgeführt: Das zu filternde digitale Signal wird mit einem konstanten Faktor a multipliziert und mit dem gefilterten und um einen Zeitwert, der gleich dem Kehrwert des Arbeitstaktes ist, verzögerten digitalen Signal addiert. Davon wird das mit dem Faktor a multiplizierte gefilterte Signal subtrahiert, welches das Ausgangssignal darstellt. Bevorzugt wird dabei der Faktor a gleich einer n-ten Potenz von 2 gewählt, so daß Multiplikationen durch wesentlich einfacher zu realisierende Schiebeoperationen um n Stellen ersetzt werden können.

Eine schaltungstechnische Realisierung zeigt Figur 4. Das zu filternde Signal IS wird einem ersten Schieberegister SR1 zugeführt und um n Stellen arithmetisch rechts geschoben. Der Ausgang des Schieberegisters SR1 ist auf einen Summierer SUM geführt, der darüber hinaus mit dem Ausgang eines Verzögerungselementes VE und über einen Vorzeichenumkehrer -1 mit dem Ausgang eines zweiten Schieberegisters SR2 verbunden. Der Eingang des zweiten Schieberegisters SR2 ist an den Ausgang des Verzögerungselementes VE angeschlossen und ist zum arithmetischen Rechtsschieben um n Stellen dieses Signals vorgesehen. Das Verzögerungselement VE wird durch den Ausgang des Summierers SUM, der das Ausgangssignal OS führt, angesteuert. Die Zeitkonstante TC einer derartigen Filterstufe errechnet sich abhängig von der Anzahl der geschobenen Stellen n und abhängig von einem Zeitwert DT, der gleich dem Kehrwert des Arbeitstaktes ist, wie folgt:

$$TC = DT/\{- \ln (1 - a)\} \text{ mit } a = 2^{"}$$

Gemäß Figur 2 erfolgt ein Übergang von dem Dämpfungswert D2 zu dem Wert D3 beispielsweise durch fortlaufende Subtraktion des um k Stellen arithmetisch rechtsgeschobenen Augenblickwertes der Dämpfung von dem Augenblickswert bis zum Erreichen des kleineren Dämpfungswertes und ein Übergang von dem Dämpfungswert D1 zu dem Wert D3 durch fortlaufende Addition des um k Stellen arithmetisch rechtsgeschobenen Augenblickwertes bis zum Erreichen des größeren Dämpfungswertes D2 oder D3. Auch hierbei ist es vorteilhaft, daß keine Multiplikationen benötigt werden. Daneben sind jedoch auch andere Realisierungen prinzipiell ebenso möglich.

Das erfindungsgemäße Verfahren gewährleistet, daß in jedem Betriebsfall, insbesondere wenn beide Sprecher aktiv sind, die Schleifenverstärkung kleiner Eins ist. Gegenüber bekannten Schaltungen ist bei dem erfindungsgemäßen Verfahren zur Durchführung jedoch ein erheblich geringerer Schaltungsaufwand als bei bekannten notwendig. Durch den langsamen und kontinuierlichen Übergang auf einen zwischen den beiden Extremwerten liegenden Zwischenwert der Dämpfung wird beim Wechsel von einem Sprechsignal auf ein Geräusch ein angenehmerer Höreindruck erzeugt. Dies wird durch eine zusätzliche Verzögerungszeit zwischen Signalwechsel und Dämpfungsänderung, wenn kein Gegensprecher auftritt, und durch Maßnahmen, die ein Umschalten durch Echos verhindern, weiter verbessert.

## Patentansprüche

1. Verfahren zur automatischen Sprachrichtungsumschaltunng, bei dem ein Empfangssignal (Rx) mit veränderbarer Dämpfung einem Lautsprecher (LS) zugeführt wird,

   bei dem ein von einem Mikrofon (MIC) abgegebenes Signal (Mx) mit einer veränderbaren Dämpfung als Sendesignal (Tx) vorgesehen ist, bei dem ein Empfangssignal (Rx) und Mikrofonsignal (Tx) jeweils fortlaufend als Sprachsignal oder Geräusch klassifiziert werden,

   bei dem die Dämpfung jeweils des einen Signals (Rx, Tx), das als Sprachsignal klassifiziert worden ist, auf einen ersten Dämpfungswert (D1) und das jeweils andere Signal (Tx, Rx) auf einen gegenüber dem ersten größeren zweiten Dämpfungswert (D2) eingestellt wird,

   bei dem im Falle der Klassifizierung beider Signale als Sprachsignal die vorhergehenden Dämpfungswerte beibehalten werden,

   bei dem im Falle einer Klassifizierung beider Signale (Rx, Tx) als Geräusch beide Dämpfungen auf einen zwischen erstem und zweiten Dämpfungswert (D1, D2) liegenden dritten Dämpfungswert (D3) eingestellt werden,

   dadurch gekennzeichnet, daß das dem Lautsprecher (LS) zugeführte Signal (Lx) und das Mikrofonsignal (Mx) miteinander hinsichtlich einer der jeweiligen Signallautstärke zuordenbaren Größe verglichen werden,

   daß bei einer auf den zweiten Dämpfungswert (D2) eingestellten Dämpfung des Mikrofonsignals (Mx) im Falle eines um einen bestimmten ersten Differenzbetrag gegenüber dem Lautsprechersignal (Lx) lauteren, als Sprachsignal erkannten Mikrofonsignal (Mx) die Dämpfung des Mikrofonsignals auf den ersten Dämpfungswert (D1) und die Dämpfung des Empfangssignals (Rx) auf den zweiten Dämpfungswert (D2) gesetzt wird und andernfalls die bisherigen Dämpfungen beibehalten werden und daß bei einer auf den zweiten Dämpfungswert (D2) eingestellten Dämpfung des Empfangssignals (Rx) im Falle eines um einen bestimmten zweiten Differenzbetrag gegenüber dem Sendesignal (Tx) lauteren, als Sprachsignal erkannten Empfangssignal (Rx) die Dämpfung des Empfangssignals (Rx) auf den ersten Dämpfungswert (D1) und die Dämpfung des Mikrofonsignals (Mx) auf den zweiten Dämpfungswert (D2) gesetzt wird und andernfalls die bisherigen Dämpfungen beibehalten werden.

2. Verfahren nach Anspruch 1, dadurch gekennzeichnet, daß die der jeweiligen Signallautstärke zuordenbare Größe die jeweilige Signalamplitude multipliziert mit einem Bewertungsfaktor ist.

3. Verfahren nach Anspruch 1, dadurch gekennzeichnet, daß ein Übergang von erstem oder zweiten Dämpfungswert (D1, D2) auf den dritten Dämpfungswert (D3) langsamer erfolgt als ein Übergang vom dritten Dämpfungswert (D3) auf den ersten oder zweiten Dämpfungswert (D1, D2) oder ein Übergang von erstem auf zweiten Dämpfungswert (D1, D2) oder umgekehrt.

4. Verfahren nach einem der Ansprüche 1 bis 3, dadurch gekennzeichnet, daß nach einem Wechsel von einem Sprachsignal auf ein Geräusch beim Empfangssignal (Rx) und/oder Mikrofonsignal (Mx) ein Übergang von erstem und/oder zweiten Dämpfungswert (D1, D2) zum dritten Dämpfungswert (D3) nach Ablauf einer gegebenen Verzögerungszeit erfolgt.

5. Verfahren nach einem der Ansprüche 1 bis 4, dadurch gekennzeichnet, daß zur Klassifizierung von Empfangssignal (Rx) und Mikrofonsignal (Mx) als Sprachsignal oder Geräusch folgende Verfahrensschritte vorgesehen sind:

   • Bildung des Betrags des jeweiligen Signals (Rx, Mx)
   • Amplitudenkompandierung
   • erste Tiefpaßfilterung mit gegebener Zeitkonstante
   • zweite Tiefpaßfilterung mit gegebener Zeitkonstante
   • Vergleich des Signals vor der zweiten Tiefpaßfilterung abzüglich eines einstellbaren Offset-Signals mit dem Signal nach der zweiten Tiefpaßfilterung

• Klassifizierung des Signals als Sprachsignal bei Überwiegen des Signals vor der zweiten Tiefpaßfilterung abzüglich des Offset-Signals oder Klassifizierung des Signals als Geräusch bei Überwiegen des Signals nach der zweiten Tiefpaßfilterung.

6. Verfahren nach Anspruch 5, **dadurch gekennzeichnet, daß** nach der ersten Tiefpaßfilterung eine Spitzenwertdetektion mit zwei alternativen Abklingzeitkonstanten durchgeführt wird, daß bei der zweiten Tiefpaßfilterung zwei alternative Zeitkonstanten vorgesehen sind und daß bei Klassifizierung des Signals als Sprachsignal die jeweils größere Zeitkonstante und bei Klassifizierung des Signals als Geräusch die jeweils kleinere Zeitkonstante bei Spitzenwertdetektor PD1 und zweiter Tiefpaßfilterung eingestellt wird.

7. Verfahren nach Anspruch 5 oder 6, **dadurch gekennzeichnet, daß** die gegebene Zeitkonstante der ersten Tiefpaßfilterung für das Mikrofonsignal (Mx) größer ist als die für das Empfangssignal (Rx).

8. Verfahren nach Anspruch 5, 6 oder 7, **dadurch gekennzeichnet, daß** bei dem Mikrofonsignal (Mx) bzw. bei dem Empfangssignal (Rx) ein interner Zustand bei der zweiten Tiefpaßfilterung auf einen Amplitudenwert gesetzt wird, der größer ist als der augenblickliche Amplitudenwert des jeweiligen Signals (Rx, Mx), wenn die Klassifizierung des Empfangssignal (Rx) bzw. des Mikrofonsignal (Mx) von Sprachsignal zu Geräusch wechselt und das jeweilige Signal (Rx, Mx) als Geräusch klassifiziert wird.

9. Verfahren nach Anspruch 8, **dadurch gekennzeichnet, daß** der interne Zustand bei der zweiten Tiefpaßfilterung auf maximalen Amplitudenwert (MA) gesetzt wird.

10. Verfahren nach einem der Ansprüche 5 bis 9, **dadurch gekennzeichnet, daß** das Offset-Signal (O) eines Signal-Geräusch-Detektors (NMT, NMR) angehoben wird, wenn der andere Signal-Geräusch-Detektor (NMR, NMT) sein Eingangssignal als Sprachsignal klassifiziert.

11. Verfahren nach einem der Ansprüche 8 bis 10, **dadurch gekennzeichnet, daß** nach dem Übergang von Sprache auf Geräusch bei einem Signal-Geräusch-Detektor (NMT, NMR) das Offset-Signal (0) und/oder der augenblickliche Amplitudenwert des jeweils anderen Signal-Geräusch-Detektors (NMR, NMT) für eine gegebene Zeit gehalten wird.

12. Verfahren nach einem der Ansprüche 1 bis 11, **gekennzeichnet durch** eine zeit- und amplitudendiskrete Signalverarbeitung.

13. Verfahren nach Anspruch 5 und 12, **dadurch gekennzeichnet, daß** bei mindestens einer Tiefpaßfilterung das zu filternde zeit- und amplitudendiskrete Signal mit einem gegebenen Faktor multipliziert und zu dem verzögerten gefilterten zeit- und amplitudendiskreten Signal addiert wird und daß davon das mit dem gegebenen Faktor multiplizierte und verzögerte gefilterte Signal subtrahiert wird.

14. Verfahren nach Anspruch 13, **dadurch gekennzeichnet, daß** der gegebene Faktor gleich einer n-ten Potenz von 2 ist und daß anstelle der Multiplikation Schiebeoperationen und n Stellen vorgesehen sind.

15. Verfahren nach Anspruch 2 und 13, **dadurch gekennzeichnet, daß** ein Übergang von dem zweiten Dämpfungswert (D2) zu dem dritten (D3) durch fortlaufende Subtraktion des um k Stellen arithmetisch rechstgeschobenen Augenblickswert der Dämpfung von dem Augenblickswert bis zum Erreichen des dritten Dämpfungswert (D3) erfolgt und daß ein Übergang von dem ersten Dämpfungswert (D1) zu dem dritten (D3) durch fortlaufende Addition des um k Stellen arithmetisch rechtsgeschobenen Augenblickswerts bis zum Erreichen des dritten Dämpfungswerts (D3) erfolgt.

16. Schaltungsanordnung zur automatischen Sprachrichtungsumschaltung mit einem steuerbaren Empfangsabschwächer (AR), an dessen Eingang das Empfangssignal (Rx) angelegt ist und an dessen Ausgang ein zur Ansteuerung des Lautsprechers (LS) vorgesehenes Signal (Lx) anliegt, einem steuerbaren Sendeabschwächer (AT), an dessen Eingang das Mikrofonsignal (Mx) angelegt ist und an dessen Ausgang das Sendesignal (Tx) anliegt, zwei Signal-Geräusch-Detektoren (NMR, NMT), von denen dem einen (NMR) das Empfangssignal (Rx) oder das Lautsprechersignal (Lx) und dem anderen (NMT) das Mikrofonsignal (Mx) oder das Sendesignal (Tx) zugeführt wird und das Empfangssignal (Rx) und Sendesignal (Tx) fortlaufend als Sprachsignal oder Geräusch klassifiziert, und mit einer den Signal-Geräusch-Detektoren (NMR, NMT) nachgeschalteten Kontroll-Logik (ACL) zur Steuerung des Empfangs- und Sendeabschwächers (AR, AT), die die Dämpfung jeweils des Signalzweiges, dessen Signal (Tx, Rx) als Sprachsignal klassifiziert worden ist, auf einen ersten Dämpfungswert und das jeweils andere Signal (Rx, Tx) auf einen gegenüber dem ersten größeren zweiten Dämpfungswert einstellt und bei Klassifizierung beider Signale (Tx, Rx) als Geräusche einen zwischen ersten und zweiten Dämpfungswert liegenden dritten Dämpfungswert einstellt, **dadurch gekennzeichnet, daß** eine Vergleichseinrichtung (CC), die das dem Lautsprecher zugeführte Signal (Lx) und das Mikrofonsignal (Mx) miteinander sowie das Sendesignal (Tx) und das Empfangssignal (Rx) miteinander hinsichtlich einer der jeweiligen Signallautstärke zuordenbaren Größe vergleicht, mit der Kontroll-Logik (ACL) gekoppelt ist und daß die Kontroll-Logik (ACL) bei einem auf den zweiten Dämpfungswert eingestellten Sendeabschwächer (AT) im Falle eines um einen bestimmten Betrag gegenüber dem Lautsprechersignal (Lx) lauteren, als Sprachsignal erkannten Mikrofonsignals (Mx) die Dämpfung des Sendeabschwächer (AT) gleich dem ersten Dämpfungswert und die Dämpfung des Empfangsabschwächers (AR) gleich dem zweiten Dämpfungswert setzt, bei einem auf den zweiten Dämpfungswert eingestellten Empfangsabschwächer (AR) im Falle eines um einen bestimmten Betrag gegenüber dem Sendesignal (Tx) lauteren, als Sprachsignal erkannten Empfangssignals (Rx) den Empfangsabschwächer (AR) auf den ersten Dämpfungswert und die Dämpfung des Sendeabschwächers (AT) auf den zweiten Dämpfungswert setzt und andernfalls die bisherigen Dämpfungen beibehält.

17. Schaltungsanordnung nach Anspruch 16, **dadurch gekennzeichnet, daß** die Signal-Geräusch-Detektoren (NMR, NMT) jeweils aus einem Gleichrichter (AV) am Eingang (E) einem dem Gleichrichter (AV) nachgeschalteten Kompander (CP), einem dem Kompander (CP) nachgeschalteten ersten Tiefpaß (LP1), einem dem ersten Tiefpaß (LP1) nachgeschalteten zweiten Tiefpaß (LP2) und einer Auswerteschaltung (CU) am Ausgang (A), der das Eingangssignal des zweiten Tiefpasses (LP2) abzüglich des steuerbaren Offset-Signals (02) und abzüglich des Ausgangssignals des zweiten Tiefpasses (LP2) zugeführt wird.

18. Schaltungsanordnung nach Anspruch 17, **dadurch gekennzeichnet, daß** dem ersten Tiefpaß (LP1) ein Spitzenwertdetektor mit einstellbarer Abklinzeitkonstante (PD) nachgeschaltet ist, daß die Zeitkonstante des zweiten Tiefpaßfilters (LP2) einstellbar ist, und daß die Steuereingänge von Spitzenwertdetektor (PD) und zweitem Tiefpaß (LP2) zur Zeitkonstanteneinstellung mit der Auswerteschaltung (CU) verbunden sind.

19. Schaltungsanordnung nach einem der Ansprüche 16 bis 18, **dadurch gekennzeichnet, daß** die Vergleichseinrichtung (CC) einen Komparator (KP) aufweist, dessen Ausgangssignal der Kontroll-Logik (ACL) zugeführt wird und dessen Eingängen jeweils ein weiterer Spitzenwertdetektor (PD1, PD2) mit gegebener Zeitkonstante vorgeschaltet ist, daß den weiteren Spitzenwertdetektoren (PD1, PD2) jeweils ein logarithmischer Verstärker (LA1, LA2) und diesen wiederum jeweils eine Pegelanpaßeinheit (GS1, GS2) vorgeschaltet ist, daß die Kontroll-Logik (ACL) im Falle einer auf den zweiten Dämpfungswert eingestellten Dämpfung des Empfangsabschwächers (AR) mittels einer Schalteinrichtung (SU) Empfangssignal (Rx) und Sendesignal (Tx) auf jeweils eine der Pegelanpaßeinheiten (GS1, GS2) aufschaltet, sowie den Signalen am Eingang des Komparators (KP) ein dem zweiten Differenzbetrag entsprechendes Offset-Signal (01) überlagert und im Falle einer auf den zweiten Dämpfungswert eingestellten Dämpfung des Sendeabschwächers (AT) mittels der Schalteinrichtung (SU) Lautsprechersignal (Lx) und Mikrofonsignal (Mx) auf jeweils eine der Pegelanpaßeinheiten (GS1, GS2) aufschaltet sowie den Signalen am Eingang des Komparators (KP) ein dem ersten Differenzbetrag entsprechendes Offset-Signal (O1) überlagert.

20. Schaltungsanordnung nach Anspruch 19, **dadurch gekennzeichnet, daß** die Dämpfungen bzw. Verstärkungen der Pegelanpaßeinheiten (GS1, GS2) in Abhängigkeit von einem entsprechenden Steuersignal der Kontroll-Logik (ACL) eingestellt werden.

21. Schaltungsanordnung nach einem der Ansprüche 17 bis 20, **dadurch gekennzeichnet, daß** Spitzenwertdetektoren (PD1, PD2) in Abhängigkeit von einem entsprechenden Steuersignal der Kontroll-Logik (ACL) eingestellt werden.

**Claims**

1. Method for the automatic switching of the speech direction, in which a received signal (Rx) with variable attenuation is supplied to a loudspeaker (LS), in which a signal (Mx) with variable attenuation, which is delivered by a microphone (MIC), is provided as transmit signal (Tx), in which the received signal (Rx) and microphone signal (Mx) are in each case continuously classified as a speech signal or as noise, in which the attenuation of the one signal (Rx, Tx) which has been classified as speech signal is in each case set to a first attenuation value (D1) and the other signal (Tx, Rx) is in each case set to a second attenuation value (D2) which is greater than the first one, in which, if both signals have been classified as speech signals, the preceding attenuation values are retained, in which, if both signals (Rx, Tx) have been classified as noise, both attenuations are set to a third attenuation value (D3) lying between the first and the second attenuation value (D1, D2),

**characterized in that** the signal (Lx) supplied to the loudspeaker (LS) and the microphone signal (Mx) are compared with one another with regard to a quantity which can be assigned to the respective signal volume,

**in that** with an attenuation of the microphone signal (Mx) set to the second attenuation value (D2), if a microphone signal (Mx) recognized as speech signal is louder than the loudspeaker signal (Lx) by a certain first difference amount, the attenuation of the microphone signal is set to the first attenuation value (D1) and the attenuation of the received signal (Rx) is set to the second attenuation value (D2) and otherwise the previous attenuations are retained and **in that**, with an attenuation of the received signal (Rx) set to the second attenuation value (D2), if a received signal (Rx) recognized as speech signal is louder than the transmit signal (Tx) by a certain second difference amount, the attenuation of the received signal (Rx) is set to the first attenuation value (D1) and the attenuation of the microphone signal (Mx) is set to the second attenuation value (D2) and otherwise the previous attenuations are retained.

2. Method according to Claim 1, **characterized in that** the quantity which can be assigned to the respective signal volume is the respective signal amplitude multiplied by a weighting factor.

3. Method according to Claim 1, **characterized in that** a transition from the first or the second attenuation value (D1, D2) to the third attenuation value (D3) is slower than a transition from the third attenuation value (D3) to the first or second attenuation value (D1, D2) or a transition from the first to the second attenuation value (D1, D2) or conversely.

4. Method according to one of Claims 1 to 3, **characterized in that**, after a change from a speech signal to a noise in the received signal (Rx) and/or microphone signal (Mx), a transition from a first and/or second attenuation value ((D1, D2) to the third attenuation value (D3) is effected after a given delay time has elapsed.

5. Method according to one of Claims 1 to 4, **characterized in that**, for classifying the received signal (Rx) and microphone signal (Mx) as speech signal or noise, the following method steps are provided:

   • forming the amount of the respective signal (Rx, Mx)
   • amplitude companding
   • first low-pass filtering with a given time constant
   • second low-pass filtering with a given time constant
   • comparing the signal before the second low-pass filtering minus an adjustable offset signal with the signal after the second low-pass filtering
   • classifying the signal as speech signal when the signal before the second low-pass filtering minus the offset signal predominates or classifying the signal as noise when the signal after the second low-pass filtering predominates.

6. Method according to Claim 5, **characterized in that**, after the first low-pass filtering, a peak-value detection with two alternative decay time constants is performed, **in that** two alternative time constants are provided in the second low-pass filtering, and **in that**, with the peak value detector PD1 and second low-pass filtering, the greater time constant in each case is set when the signal is classified as speech signal and the smaller time constant in each case is set when the signal is classified as noise.

7. Method according to Claim 5 or 6, **characterized in that** the given time constant of the first low-pass filtering is greater for the microphone signal (Mx) than that for the received signal (Rx).

8. Method according to Claim 5, 6 or 7, **characterized in that** in the microphone signal (Mx) or in the received signal (Rx), respectively, an internal state in the second low-pass filtering is set to an amplitude value which is greater than the instantaneous amplitude value of the respective signal (Rx, Mx) when the classification of the received signal (Rx) or of the microphone signal (Mx), respectively, changes from speech signal to noise and the respective signal (Rx, Mx) is classified as noise.

9. Method according to Claim 8, **characterized in that** the internal state in the second low-pass filtering is set to the maximum amplitude value (MA).

10. Method according to one of Claims 5 to 9, **characterized in that** the offset signal (O) of a signal-noise detector (NMT, NMR) is raised when the other signal-noise detector (NMR, NMT) classifies its input signal as a speech signal.

11. Method according to one of Claims 8 to 10, **characterized in that** after the transition from speech to noise in a signal-noise detector (NMT, NMR), the offset signal (O) and/or the instantaneous amplitude value of the other signal-noise detector in each case (NMR, NMT) is held for a given time.

12. Method according to one of Claims 1 to 11, **characterized by** time- and amplitude-discrete signal processing.

13. Method according to Claims 5 and 12, **characterized in that** in at least one low-pass filtering, the time- and amplitude-discrete signal to be filtered is multiplied by a give factor and added to the delayed filtered time- and amplitude-discrete signal and **in that** from this the filtered signal multiplied by the given factor and delayed is subtracted.

14. Method according to Claim 13, **characterized in that** the given factor is equal to an $n^{th}$ power of 2 and **in that**, instead of the multiplication, shift operations and n positions are provided.

15. Method according to Claims 2 and 13, **characterized in that** a transition from the second attenuation value (D2) to the third one (D3) is effected by a continuous subtraction of the instantaneous value, shifted to the right arithmetically by k positions, of the attenuation from the instantaneous value up until the third attenuation value (D3) is reached and **in that** a transition from the first attenuation value (D1) to the third one (D3) is effected by continuous addition of the instantaneous value, shifted to the right arithmetically by k positions, until the third attenuation value (D3) is reached.

16. Circuit arrangement for automatic switching of the speech direction comprising a controllable receive attenuator (AR), at the input of which the received signal (Rx) is applied and at the output of which a signal (Lx) provided for driving the loudspeaker (LS) is present, a controllable transmit attenuator (AT), at the input of which the microphone signal (Mx) is applied and at the output of which the transmit signal (Tx) is present, two signal-noise detectors (NMR, NMT), one of which (NMR) is supplied with the received signal (Rx) or the loudspeaker signal (Lx) and the other one of which (NMT) is supplied with the microphone signal (Mx) or the transmit signal (Tx) and which continuously classifies the received signal (Rx) and the transmit signal (Tx) as speech signal or noise, and with a control logic (ACL), following the signal-noise detectors (NMR, NMT), for controlling the received and transmit attenuator (AR, AT), which, in each case, sets the attenuation of the signal branch, the signal (Tx, Rx) of which has been classified as speech signal, to a first attenuation value and the other signal in each case (Rx, Tx) to a second attenuation value which is greater than the first one and sets a third attenuation value lying between the first and second attenuation value if both signals (Tx, Rx) have been classified as noise,
**characterized in that** a comparison device (CC), which compares the signal (Lx) supplied to the loudspeaker and the microphone signal (Mx) with one another and the transmit signal (Tx) and the received signal (Rx) with one another with regard to a quantity which can be allocated to the respective signal volume, is coupled to the control logic (ACL), and **in that** the control logic (ACL), with a transmit attenuator (AT) set to the second attenuation value, if a microphone signal (Mx) recognized as the speech signal is louder than the loudspeaker signal (Lx) by a certain amount, sets the attenuation of the transmit attenuator (AT) equal to the first attenuation value and the attenuation of the received attenuator (AR) equal to the second attenuation value, with a receive attenuator (AR) set to the second attenuation value, if a received signal (Rx) recognized as speech signal is louder than the transmit signal (Tx) by a certain amount sets the receive attenuator (AR) to the first attenuation value and the attenuation of the transmit attenuator (AT) to the second attenuation value and otherwise retains the previous attenuations.

17. Circuit arrangement according to Claim 16, **characterized in that** the signal-noise detectors (NMR, NMT) in each case consist of a rectifier (AV) at the input (E), a compander (CP) following the rectifier (AV), a first low-pass filter (LP1) following the compander (CP), a second low-pass filter (LP2) following the first low-pass filter (LP1), and an evaluating circuit (CU) at the output (A) which is supplied with the input signal of the second low-pass filter (LP2) minus the controllable offset signal (02) and minus the output signal of the second low-pass filter (LP2).

18. The circuit arrangement according to Claim 17, **characterized in that** the first low-pass filter (LP1) is followed by a peak value detector with an adjustable decay time constant (PD), **in that** the time constant of the second low-pass filter (LP2) is adjustable and **in that** the control inputs of peak value detector (PD) and second low-pass filter (LP2) are connected to the evaluating circuit (CU) for adjusting the time constant.

19. Circuit arrangement according to one of Claims 16 to 18, **characterized in that** the comparison device (CC) has a comparator (KP), the output signal of which is supplied to the control logic (ACL) and the inputs of which are in each case preceded by a further peak value detector (PD1, PD2) with a given time constant, **in that** the further peak value detectors (PD1, PD2) are in each case preceded by a logarithmic amplifier (LA1, LA2) and these are in turn preceded in each case by a level matching unit (GS1, GS2), **in that** the control logic (ACL), if the attenuation of the receive attenuator (AR) is set to the second attenuation value, connects the received signal (Rx) and transmit signal (Tx) to in each case one of the level matching units (GS1, GS2) by means of a switching device (SU), and superimposes an offset signal (O1) corresponding to the second difference amount on the signals at the input of the comparator (KP), and, if the attenuation of the transmit attenuator (AT) is set to the second attenuation value, connects the loudspeaker signal (Lx) and microphone signal (Mx) to in each case one of the level matching units (GS1, GS2) by means of the switching device (SU), and superimposes an offset signal (O1) corresponding to the first difference amount on the signals at the input of the comparator (KP).

20. Circuit arrangement according to Claim 19, **characterized in that** the attenuations or amplifications of the level matching units (GS1, GS2) are set in dependence on a corresponding control signal of the control logic (ACL).

21. Circuit arrangement according to one of Claims 17 to 20, **characterized in that** peak value detectors (PD1, PD2) are set in dependence on a corresponding control signal of the control logic (ACL).

**Revendications**

1. Procédé de commutation automatique de direction de parole,
   dans lequel un signal de réception (Rx) à amortissement modifiable est amené à un haut-parleur (LS),
   dans lequel un signal (Mx) à amortissement modifiable délivré par un microphone (MIC) est prévu comme signal d'émission (Tx),
   dans lequel un signal de réception (Rx) et un signal de microphone (Tx) sont chacun classifiés de façon continue comme signal vocal ou comme bruit,
   dans lequel l'amortissement du signal (Rx, Tx) qui a été classifié comme signal vocal est réglé sur une première valeur d'amortissement (D1) et l'autre signal (Tx, Rx), sur une deuxième valeur d'amortissement (D2) plus grande que la première,
   dans lequel les valeurs d'amortissement précédentes sont conservées si les deux signaux sont classifiés comme signal vocal,
   dans lequel les deux amortissements sont réglés sur une troisième valeur d'amortissement (D3) comprise entre la première et la deuxième valeur d'amortissement (D1, D2) si les deux signaux (Rx, Tx) sont classifiés comme bruit,
   **caractérisé en ce que** le signal (Lx) amené au haut-parleur (LS) et le signal de microphone (Mx) sont comparés ensemble eu égard à une grandeur associable à l'intensité acoustique de signal respective,
   **en ce que**, si l'amortissement du signal de microphone (Mx) est réglé sur la deuxième valeur d'amortissement (D2) en cas de signal de microphone (Mx) reconnu comme signal vocal plus fort d'une première valeur différentielle déterminée que le signal de haut-parleur (Lx), l'amortissement du signal de microphone est mis sur la première valeur d'amortissement (D1) et l'amortissement du signal de réception (Rx) sur la deuxième valeur d'amortissement (D2), sinon les amortissements courants sont conservés, et **en ce que**, si l'amortissement du signal de réception (Rx) est réglé sur la deuxième valeur d'amortissement (D2) en cas de signal de réception (Rx) reconnu comme signal vocal plus fort d'une deuxième valeur différentielle déterminée que le signal d'émission (Tx), l'amortissement du signal de réception (Rx) est mis sur la première valeur d'amortissement (D1) et l'amortissement du signal de microphone (Mx) sur la deuxième valeur d'amortissement (D2), sinon les amortissements courants sont conservés.

2. Procédé selon la revendication 1, **caractérisé en ce que** la grandeur associable à l'intensité acoustique de signal respective est l'amplitude de signal respective multipliée par un facteur de pondération.

3. Procédé selon la revendication 1, **caractérisé en ce qu'**un passage de la première ou de la deuxième valeur d'amortissement (D1, D2) à la troisième valeur d'amortissement (D3) a lieu plus lentement qu'un passage de la troisième valeur d'amortissement (D3) à la première ou à la deuxième valeur d'amortissement (D1, D2) ou qu'un passage de la première à la deuxième valeur d'amortissement (D1, D2) ou inversement.

4. Procédé selon l'une des revendications 1 à 3, **caractérisé en ce que**, après un changement d'un signal vocal à un bruit en ce qui concerne le signal de réception (Rx) et/ou le signal de microphone (Mx), un passage de la première valeur d'amortissement et/ou de la deuxième (D1, D2) à la troisième valeur d'amortissement (D3) a lieu à l'expiration d'un temps de retard donné.

5. Procédé selon l'une des revendications 1 à 4, **caractérisé en ce que**, pour classifier le signal de réception (Rx) et le signal de microphone (Mx) comme signal vocal ou comme bruit, les étapes de processus suivantes sont prévues :

formation de la valeur du signal respectif (Rx, Mx) ;

compression-expansion d'amplitude ;

premier filtrage passe-bas avec constante de temps donnée ;

deuxième filtrage passe-bas avec constante de temps donnée ;

comparaison du signal avant le deuxième filtrage passe-bas, déduction faite d'un signal de décalage réglable, avec le signal après le deuxième filtrage passe-bas ;

classification du signal comme signal vocal en cas de prédominance du signal avant le deuxième filtrage passe-bas, déduction faite du signal de décalage, ou classification du signal comme bruit en cas de prédominance du signal après le deuxième filtrage passe-bas.

6. Procédé selon la revendication 5, **caractérisé en ce que**, après le premier filtrage passe-bas, on réalise une détection de valeur maximale avec deux constantes de temps de décroissance au choix, **en ce qu'**il est prévu deux constantes de temps au choix pour le deuxième filtrage passe-bas et **en ce que**, si le signal est classifié comme signal vocal, c'est la constante de temps la plus grande qui est réglée dans le détecteur de valeur maximale PD1 et le deuxième filtrage passe-bas et, si le signal est classifié comme bruit, c'est la constante de temps la plus petite.

7. Procédé selon la revendication 5 ou 6, **caractérisé en ce que** la constante de temps donnée du premier filtrage passe-bas pour le signal de microphone (Mx) est plus grande que celle pour le signal de réception (Rx).

8. Procédé selon la revendication 5, 6 ou 7, **caractérisé en ce que**, pour ce qui est du signal de microphone (Mx) ou du signal de réception (Rx), un état interne est mis pendant le deuxième filtrage passe-bas sur une valeur d'amplitude qui est plus grande que la valeur d'amplitude instantanée du signal respectif (Rx, Mx) lorsque la classification du signal de réception (Rx) ou du signal de microphone (Mx) change de "signal vocal" à "bruit" et que le signal respectif (Rx, Mx) est classifié comme bruit.

9. Procédé selon la revendication 8, **caractérisé en ce que** l'état interne lors du deuxième filtrage passe-bas est mis sur la valeur d'amplitude maximale (MA).

10. Procédé selon l'une des revendications 5 à 9, **caractérisé en ce que** le signal de décalage (O) d'un détecteur de signal-bruit (NMT, NMR) est augmenté lorsque l'autre détecteur de signal-bruit (NMR, NMT) classifie son signal d'entrée comme signal vocal.

11. Procédé selon l'une des revendications 8 à 10, **caractérisé en ce que**, après le passage de "parole" à "bruit" dans un détecteur de signal-bruit (NMT, NMR), le signal de décalage (O) et/ou la valeur d'amplitude instantanée de l'autre détecteur de signal-bruit (NMR, NMT) sont maintenus pendant un temps donné.

12. Procédé selon l'une des revendications 1 à 11, **caractérisé par** un traitement de signal temporellement discret et à amplitude discrète.

13. Procédé selon les revendications 5 et 12, **caractérisé en ce que**, lors d'au moins un filtrage passe-bas, le signal à filtrer, temporellement discret et à amplitude discrète, est multiplié par un facteur donné et est additionné au signal filtré temporisé, temporellement discret et à amplitude discrète, et **en ce que** l'on en soustrait le signal filtré multiplié par le facteur donné et temporisé.

14. Procédé selon la revendication 13, **caractérisé en ce que** le facteur donné est égal à une puissance énième de 2 et **en ce que** des opérations de décalage de n décimales sont prévues à la place de la multiplication.

15. Procédé selon les revendications 2 et 13, **caractérisé en ce qu'**il y a un passage de la deuxième valeur d'amortissement (D2) à la troisième (D3) en soustrayant de façon continue la valeur instantanée de l'amortissement, décalée arithmétiquement de k décimales vers la droite, de la valeur instantanée, et ce jusqu'à obtention de la troisième valeur d'amortissement (D3), et **en ce qu'**il y a un passage de la première valeur d'amortissement (D1) à la troisième (D3) en additionnant de façon continue la valeur instantanée décalée arithmétiquement de k décimales vers la droite jusqu'à obtention de la troisième valeur d'amortissement (D3) .

16. Montage de circuits servant à la commutation automatique de direction de parole et comprenant : un affaiblisseur de réception (AR) pouvant être commandé, à l'entrée duquel le signal de réception (Rx) est appliqué et à la sortie duquel un signal (Lx) prévu pour commander le haut-parleur (LS) est présent ; un affaiblisseur d'émission (AT) pouvant être commandé, à l'entrée duquel le signal de microphone (Mx) est appliqué et à la sortie duquel le signal d'émission (Tx) est présent ; deux détecteurs de signal-bruit (NMR, NMT) parmi lesquels le signal de réception (Rx) ou le signal de haut-parleur (Lx) est amené à l'un (NMR) et le signal de microphone (Mx) ou le signal d'émission (Tx) est amené à l'autre (NMT) et qui classifient de façon continue le signal de réception (Rx) et le signal d'émission (Tx) comme signal vocal ou comme bruit ; ainsi qu'une logique de commande (ACL), placée en aval des détecteurs de signal-bruit (NMR, NMT), servant à commander l'affaiblisseur de réception (AR) et l'affaiblisseur d'émission (AT) et qui règle l'amortissement de la branche de signal dont le signal (Tx, Rx) a été classifié comme signal vocal sur une première valeur d'amortissement et l'autre signal (Rx, Tx) sur une deuxième valeur d'amortissement plus grande que la première, et qui, si les deux signaux (Tx, Rx) sont classifiés comme bruits, règle une troisième valeur d'amortissement comprise entre la première et la deuxième valeur d'amortissement ; **caractérisé en ce qu'**un dispositif comparateur (CC), qui compare le signal amené au haut-parleur (Lx) et le signal de microphone (Mx) ensemble ainsi que le signal d'émission (Tx) et le signal de réception (Rx) ensemble eu égard à une grandeur associable à l'intensité acoustique de signal respective, est couplé à la logique de commande (ACL), et **en ce que** la logique de commande (ACL), si l'affaiblisseur d'émission (AT) est réglé sur la deuxième valeur d'amortissement en cas de signal de microphone (Mx) reconnu comme signal vocal plus fort d'une valeur déterminée que le signal de haut-parleur (Lx), rend l'amortissement de l'affaiblisseur d'émission (AT) égal à la première valeur d'amortissement et l'amortissement de l'affaiblisseur de réception (AR) égal à la deuxième valeur d'amortissement, si un affaiblisseur de réception (AR) est réglé sur la deuxième valeur d'amortissement en cas de signal de réception (Rx) reconnu comme signal vocal plus fort d'une valeur déterminée que le signal d'émission (Tx), met l'affaiblisseur de réception (AR) sur la première valeur d'amortissement et l'amortissement de l'affaiblisseur d'émission (AT) sur la deuxième valeur d'amortissement et, sinon, conserve les amortissements courants.

17. Montage de circuits selon la revendication 16, **caractérisé en ce que** les détecteurs de signal-bruit (NMR, NMT) se composent chacun d'un redresseur (AV) situé à l'entrée (E), d'un compresseur-expanseur (CP) placé en aval du redresseur (AV), d'un premier passe-bas (LP1) placé en aval du compresseur-expanseur (CP), d'un deuxième passe-bas (LP2) placé en aval du premier passe-bas (LP1) et d'un circuit d'analyse (CU), situé à la sortie (A), auquel est amené le signal d'entrée du deuxième passe-bas (LP2) déduction faite du signal de décalage (02) pouvant être commandé et déduction faite du signal de sortie du deuxième passe-bas (LP2).

18. Montage de circuits selon la revendication 17, **caractérisé en ce qu'**un détecteur de valeur maximale à constante de temps de décroissance réglable (PD) est placé en aval du premier passe-bas (LP1), **en ce que** la constante de temps du deuxième filtre passe-bas (LP2) est réglable, et **en ce que** les entrées de commande du détecteur de valeur maximale (PD) et du deuxième passe-bas (LP2) sont reliées au circuit d'analyse (CU) en vue du réglage de constante de temps.

19. Montage de circuits selon l'une des revendications 16 à 18, **caractérisé en ce que** le dispositif comparateur (CC) comporte un comparateur (KP) dont le signal de sortie est amené à la logique de commande (ACL) et en amont de chacune des entrées duquel est placé un détecteur de valeur maximale supplémentaire (PD1, PD2) à constante de temps donnée, **en ce que**, en amont de chacun des détecteurs de valeur maximale supplémentaires (PD1, PD2) est placé un amplificateur logarithmique (LA1, LA2) en amont de chacun desquels est à son tour placée une unité d'adaptation de niveau (GS1, GS2), **en ce que** la logique de commande (ACL), si l'amortissement de l'affaiblisseur de réception (AR) est réglé sur la deuxième valeur d'amortissement, connecte le signal de réception (Rx) et le signal d'émission (Tx) chacun à l'une des unités d'adaptation de niveau (GS1, GS2) au moyen d'un dispositif de commutation (SU) et superpose aux signaux situés à l'entrée du comparateur (KP) un signal de décalage (01) correspondant à la deuxième valeur différentielle et, si l'amortissement de l'affaiblisseur d'émission (AT) est réglé sur la deuxième valeur d'amortissement, connecte le signal de haut-parleur (Lx) et le signal de microphone (Mx) chacun à l'une des unités d'adaptation de niveau (GS1, GS2) au moyen du dispositif de commutation (SU) et superpose aux signaux situés à l'entrée du comparateur (KP) un signal de décalage (O1) correspondant à la première valeur différentielle.

20. Montage de circuits selon la revendication 19, **caractérisé en ce que** les amortissements ou les amplifications des unités d'adaptation de niveau (GS1, GS2) sont réglés en fonction d'un signal de commande approprié de la logique de commande (ACL).

21. Montage de circuits selon l'une des revendications 17 à 20, **caractérisé en ce que** les détecteurs de valeur maximale (PD1, PD2) sont réglés en fonction d'un signal de commande approprié de la logique de commande (ACL).

FIG 1

FIG 2

FIG 3

FIG 4